# EUROPÄISCHE PATENTSCHRIFT

(11) **EP 4 223 134 B1**
(45) Veröffentlichungstag und Bekanntmachung des Hinweises auf die Patenterteilung: **11.12.2024**
(21) Anmeldenummer: 23152617.9
(22) Anmeldetag: 20.01.2023
(51) Int. Cl.: A23G 9/12

(54) **VORRICHTUNG ZUR HERSTELLUNG EINES FLIESSFÄHIGEN PRODUKTES**
DEVICE FOR PRODUCING A FLUID PRODUCT
DISPOSITIF POUR LA FABRICATION D'UN PRODUIT FLUIDE

(30) Priorität: 01.02.2022 DE 102022102270
(43) Veröffentlichungstag der Anmeldung: 09.08.2023
(73) Patentinhaber: Kälte-Rudi GmbH & Co. KG, 75210 Keltern (DE)
(72) Erfinder: Rischewski, Marc, 75210 Keltern (DE)
(74) Vertreter: Wacker, Jost Oliver

(56) Entgegenhaltungen:
- EP-A2- 0 335 096
- DE-T2- 69 307 615
- GB-A- 999 332

## Beschreibung

Die Erfindung betrifft eine Vorrichtung zur Herstellung eines fließfähigen Produktes, wie insbesondere von Speiseeis, Eiscreme oder eines sonstigen cremigen Produktes aus einem Ausgangsgemisch nach dem Oberbegriff des Anspruchs 1. Diese Vorrichtung umfasst einen in einem Vorrichtungsgehäuse vorgesehenen Verarbeitungsbehälter mit einer temperierbaren Innenwandung, die einen zur Aufnahme des Ausgangsgemisches geeigneten Innenraum umschließt, der über eine Behälteröffnung zugänglich ist. Die Innenwandung ist dabei zum Erwärmen oder Kühlen des Ausgangsgemisches geeignet. Um einen Zugang für eine vollständige Entnahme des Produktes aus dem Verarbeitungsbehälter in einem gewünschten Maße ermöglichen oder aber den Innenraum während des Herstellungsprozesses abdichtend verschließen zu können, umfasst die Vorrichtung eine an dem Vorrichtungsgehäuse verlagerbar gehaltene Behältertür. Diese ist zwischen einer Schließposition, in welcher die Behälteröffnung durch die Behältertür fluiddicht verschlossen ist, und einer Öffnungsposition verschwenkbar, in welcher der Innenraum über die Behälteröffnung zugänglich ist. Die Vorrichtung umfasst zudem ein in dem Innenraum angeordnetes Rührelement, das zum Verrühren und Durchmischen des Ausgangsgemisches beziehungsweise des Produktes von einer rotierbaren Antriebswelle angetrieben werden kann und an dem Beabstandungsmittel angebracht sind, die zur Beabstandung des Rührelementes gegenüber dem Verarbeitungsbehälter dienen.

Gattungsgemäße Vorrichtungen der vorgenannten Art dienen in erster Linie dazu, dass ein Ausgangsgemisch, insbesondere mit Bestandteilen von Wasser, Milch, Sahne, Joghurt, Verdickungsmittel, Fruchtstücken, Fruchtkonzentrat, Gewürzen und sonstigen geschmackgebenden Bestandteilen, wie Zucker, Vanille, Schokolade und sonstige bekannte und geeignete Bestandteile von Nahrungsmitteln, solange mittels der Rühreinrichtung umgerührt wird, bis bei gleichzeitiger Temperierung ein fließfähiges, viskoses Produkt, wie insbesondere Speiseeis, Eiscreme oder eine sonstige Creme entsteht.

Ein wesentlicher Bestandteil dieser Vorrichtungen sind die nicht metallischen Beabstandungsmittel, die eine Beabstandung des metallischen Teiles des rotierbaren Rührelementes gegenüber dem ebenfalls metallischen Verarbeitungsbehälter bewirken und dadurch eine Verlagerung von Metall auf Metall verhindern. Hierdurch wird ein abrasiver Verschleiß des Rührelementes, des Verarbeitungsbehälters verhindert.

Aus der DE 693 07 615 T2 ist beispielsweise eine Rühreinrichtung zur Herstellung von Speiseeis bekannt, die eine Rühreinrichtung umfasst, die U-förmige Schaufelblätter aufweist. Um einen unmittelbaren Kontakt des Rührelementes mit der Innenwandung eines Verarbeitungsbehälters vermeiden zu können, sind am Rührelement mehrere Beabstandungsmittel vorgesehen. Zum einen sind an dem radial äußeren Ende des Rührelementes mehrere in radialer Richtung wirkende und in Form von Kunststoffschabern ausgebildete Beabstandungsmittel angeordnet. Zum anderen ist an der axialen Stirnseite des Rührelements ein Kunststoffstopfen vorgesehen, wobei ein Kopfabschnitt des Kunststoffstopfens gegenüber der axialen Stirnseite des Rührelementes hervorsteht.

Nachteilig an der bekannten Vorrichtung ist, dass in Abhängigkeit der Fertigungstoleranzen ein sehr hoher Fertigungs- und Montageaufwand für den Kunststoffstopfen entstehen kann, da dieser an jede einzelne Vorrichtung und deren Fertigungstoleranzen angepasst werden muss. Zudem wird über die axiale Erstreckung des von der Rühreinrichtung abstehenden Teils des Kunststoffstopfens an der Innenseite der Behältertür ein Totbereich gebildet, in dem eine größere Menge des herzustellenden Produktes anhaftet. Nach Beendigung eines Herstellungsverfahrens entsteht daher in diesem Bereich ein erhöhter Reinigungsaufwand.

GB 999 332 A beschreibt eine Vorrichtung zur Herstellung und Ausgabe von Slush-Eis. Die Vorrichtung weist einen zylindrischen Bearbeitungsbehälter auf, der durch eine angeschraubte Platte stirnseitig verschlossen ist. Innerhalb des Bearbeitungsbehälters ist ein Rührwerk vorgesehen, das zwei schaufelförmige Abstreifmittel aufweist, die sich zwischen zwei stirnseitigen Armen des Rührwerks in Längsrichtung erstrecken.

EP 0 335 096 B1 beschreibt eine Homogenisierungsvorrichtung mit einem Verarbeitungsbehälter in dem ein Leitkonus und eine an einem Deckel gelagerte Rühreinrichtung vorgesehen sind. Die Abgabe eines hergestellten Produktes erfolgt über ein bodenseitiges Auslassventil.

Die Aufgabe der Erfindung ist es, die Nachteile zu vermeiden, den direkten Kontakt zwischen zwei Metallteilen der Vorrichtung zu verhindern und gleichzeitig den Reinigungsaufwand zu reduzieren.

Diese Aufgabe wird durch eine Vorrichtung mit den Merkmalen des Anspruchs 1 gelöst. Dabei ist vorgesehen, dass die Beabstandungsmittel wenigstens ein Abstreifelement aufweisen, das in axialer Richtung an der Stirnseite Rührelementes übersteht und sich im Übrigen an der Stirnseite in radialer Richtung erstreckt. Im Betrieb der Vorrichtung ist das Abstreifelement dabei zusammen mit dem Rührelement in dessen Drehrichtung und anliegend an einer Innenseite der Behältertür umlaufend angetrieben. Diese Anordnung des Abstreifelementes zwischen der Stirnseite des Rührelementes und der Innenseite der Behältertür gewährleistet einerseits, dass ein axialer Kontakt zwischen Rührelement und Behältertür verhindert wird, die typischerweise beide zumindest teilweise aus Metall hergestellt sind. Hierdurch kann eine Beschädigung beziehungsweise ein erhöhter Verschleiß durch das Verlagern von Metall auf Metall verhindert werden. Darüber hinaus bewirkt das Abstreifelement, dass das sich an der Behältertür ansammelnde Produkt während des Herstellungsprozesses kontinuierlich wieder entfernt und in den Rührprozess zurückgeführt wird. Dadurch kann das Anhaften einer kompakten Produktschicht an der Behältertür verhindert werden. Auf diese Weise wird die Menge des beim Entleeren an der Behältertür anhaftenden Produktes reduziert und der Reinigungsaufwand nach einem Herstellungsprozess deutlich reduziert.

In einer besonders vorteilhaften Ausführungsform erstreckt sich das Abstreifelement zumindest im Wesentlichen über den Radius der Behälteröffnung. Hierdurch ist sichergestellt, dass die dem Innenraum zugewandte und mit dem Produkt in Kontakt kommende Innenseite der Behältertür von dem Abstreifelement vollständig erfasst und gereinigt werden kann. Bei einer Beendigung des Herstellungsprozesses und einer Verlagerung der Behältertür in die Öffnungsposition verbleiben somit nur geringe Reste des Produktes an der Behältertür. Dadurch kann der durch Anhaften entstehende Produktverlust und der Reinigungsaufwand nach dem Herstellungsprozess minimiert werden.

Vorteilhafterweise ist das Abstreifelement durch eine Gummilippe gebildet. Hierdurch ist sichergestellt, dass das mit dem Verarbeitungsbehälter in Kontakt tretende Abstreifelement eine ausreichend große Verformbarkeit aufweist, um über die gesamte Dauer des Herstellungsprozesses auch über einen größeren Spaltmaßbereich hinweg eine ausreichende Reinigungswirkung zu erzielen.

Vorteilhafterweise ist das Abstreifelement lösbar an dem Rührelement angeordnet. Hierdurch kann das einem Verschleiß unterliegende Abstreifelement bei Bedarf schnell und einfach ausgetauscht und durch ein neues Abstreifelement ersetzt werden. Dabei kann zudem vorgesehen sein, dass in Abhängigkeit des jeweils vorgesehenen Verwendungszwecks der Vorrichtung unterschiedliche Abstreifelemente mit unterschiedlichen Härtegraden und/oder Abmessungen zum Einsatz gelangen.

In einer weiteren vorteilhaften Ausführungsform weist das Rührelement eine Aufnahmenut auf, in welcher das Abstreifelement aufgenommen ist. Dabei kann das Abstreifelement in der Aufnahmenut formschlüssig, rastend oder klemmend gehalten sein. Zudem kann die Aufnahmenut ein U-Profil, L-Profil, C-Profil, oder ein T-Profil aufweisen. Auf diese Weise ist gewährleistet, dass das Abstreifelement in der ursprünglich angedachten und für eine hohe Reinigungswirkung erforderlichen Position stabil gehalten wird.

Zudem ist es günstig, wenn an dem Rührelement wenigstens ein Befestigungsmittel, wie insbesondere ein Schraubenelement, ein Bolzen oder eine Klammer angeordnet ist, das eine gegen das Abstreifmittel wirkende Haltekraft zur positionsfesten Anordnung an dem Rührelement bewirkt. Hierdurch ist eine stabile Position des Abstreifelementes relativ zum Rührelement sichergestellt.

Dabei ist es günstig, wenn das Befestigungsmittel, insbesondere mit einem Kopfabschnitt, in radialer Richtung von einer Umfangsfläche des Rührelementes absteht, wodurch es gleichzeitig als in radialer Richtung wirkendes Beabstandungsmittel fungieren kann.

Vorteilhafterweise ist das Befestigungsmittel dabei durch eine Kunststoffschraube gebildet. Die Kunststoffschraube kann dabei in ein entsprechendes Gewinde eingeschraubt werden, das in die Umfangsfläche des Rührelementes eingelassen ist. Hierdurch kann das Abstreifmittel besonders einfach fixiert und bei Bedarf, durch Entfernen der Kunststoffschraube abgenommen und ausgetauscht werden. Zudem kann der Schraubenkopf hierbei als Beabstandungsmittel in radialer Richtung fungieren.

Zudem ist es günstig, wenn das Abstreifelement sich zusätzlich, zumindest abschnittsweise, in axialer Richtung entlang der Innenwandung erstreckt. Auf diese Weise kann unter Zwischenschaltung des Abstreifelementes auch ein radialer Kontakt des Rührelementes mit der Innenwandung vermieden werden. Ferner kann auf diese Weise auch der Eckbereich zwischen Behältertür und Innenwandung wirksam von anhaftendem Produkt freigehalten werden.

Vorteilhafterweise dient der sich axial erstreckende Abschnitt des Abstreifelementes dabei zusätzlich zur Fixierung des Abstreifelementes in radialer Richtung. Hierzu können an dem sich axial erstreckenden Abschnitt beispielsweise Klemm- oder Rastmittel vorgesehen sein, die mit entsprechenden Gegenklemm- oder Rastmitteln zusammenwirken, die an der betreffenden Umfangsfläche des Rührelementes vorgesehen sind. Hierdurch kann der sich radial erstreckende Abschnitt des Abstreifelementes durch den damit einstückig ausgebildeten, sich axial erstreckenden Abschnitt selbst fixiert werden.

In einer bevorzugten Ausführungsform weist das Abstreifelement ein Profil auf, das sich in radialer Richtung zu einem Kontaktbereich hin verjüngt. Durch einen solchen Kontaktbereich kann, insbesondere bei Verwendung eines elastischen Materials des Abstreifelementes, ein besonders wirksames Abziehen des Produktes von der Innenseite der Behältertür erzielt werden.

In einer weiteren vorteilhaften Ausführungsform der Vorrichtung weisen die Beabstandungsmittel wenigstens zwei, vorzugsweise drei Abstreifelemente auf, die sich an der Stirnseite des Rührelementes jeweils in radialer Richtung erstrecken und dabei zueinander winkelversetzt in Drehrichtung des Rührelementes angeordnet sind. Hierdurch kann die Abstreifleistung bezüglich des an der Innenseite der Behältertür anhaftenden Produktes erhöht werden, wodurch der Reinigungsaufwand nach einem Herstellungsprozess weiter vermindert werden kann. Zudem kann das Rührelement durch das wenigstens eine zusätzliche Abstreifelement während eines Herstellungsvorganges stabiler gegenüber der Behältertür abgestützt werden. Dabei ist insbesondere im Falle von drei zueinander winkelversetzten Abstreifelementen durch deren statisch bestimmtes Abstützverhalten eine besonders stabile Abstützung des Rührelementes möglich, die im Betrieb eine ruhige Rotationsbewegung des Rührelementes gewährleistet.

Darüber hinaus ist es günstig, wenn das Rührelement von einem der Beabstandungsmittel, das an einen Behälterboden des Verarbeitungsbehälters anlegbar ist, in Richtung der Behältertür mit einer Anpresskraft beaufschlagbar ist. Auf diese Weise kann einerseits sichergestellt werden, dass das Rührelement im Betrieb auch gegenüber dem Behälterboden einen ausreichenden Abstand aufweist, dass eine Bewegung von Metall auf Metall verhindert wird. Andererseits kann hierdurch sichergestellt werden, dass die Stirnseite des Rührelementes auch im Falle eines axialen Bewegungsspiels ausreichend nahe an der Behältertür angeordnet ist, dass das Abstreifelement mit deren Innenseite in Anlage kommt und diese im Betrieb vom anhaftenden Produkt befreit.

In einer besonders bevorzugten Ausführungsform ist das an den Behälterboden anlegbare Beabstandungsmittel dabei durch ein umlaufend antreibbares Abschabelement gebildet, das mit einer elastischen Rückstellkraft beaufschlagbar ist. Hierdurch kann das Beabstandungsmittel zusätzlich dazu dienen, auch den Behälterboden im Betrieb wiederkehrend von anhaftendem Produkt zu befreien und dadurch den späteren Reinigungsaufwand weiter zu verringern.

Es wird darauf hingewiesen, dass alle oben beschriebenen Merkmale des erfindungsgemäßen Gegenstandes untereinander austauschbar beziehungsweise kombinierbar sind, sofern ein Austausch oder eine Kombination derselben aus technischen Gründen nicht ausgeschlossen ist.

In den Figuren ist eine beispielhafte Ausführungsform der Erfindung dargestellt. Es zeigen:
- Figur 1: eine Frontansicht einer erfindungsgemäßen Vorrichtung mit einer Behältertür in einer Schließposition,
- Figur 2: eine Seitenansicht der Vorrichtung nach Figur 1,
- Figur 3: eine perspektivische Ansicht der erfindungsgemäßen Vorrichtung mit einer Behältertür in einer Öffnungsposition,
- Figur 4: eine perspektivische Ansicht einer Rühreinrichtung der Vorrichtung nach Figur 1 bis 3,
- Figur 5: einen Schnitt durch ein in einer Aufnahmenut aufgenommenes Abstreifelement der Rühreinrichtung nach Figur 4,
- Fig. 6: einen Schnitt durch eine alternative Ausführungsform des Abstreifelementes nach Figur 5,
- Figur 7: eine Seitenansicht der Rühreinrichtung in Richtung VII aus Figur 4 mit einem Abstreifelement in einer alternativen Ausführungsform und
- Figur 8: eine perspektivische Ansicht der Rühreinrichtung in einer alternativen Ausführungsform.

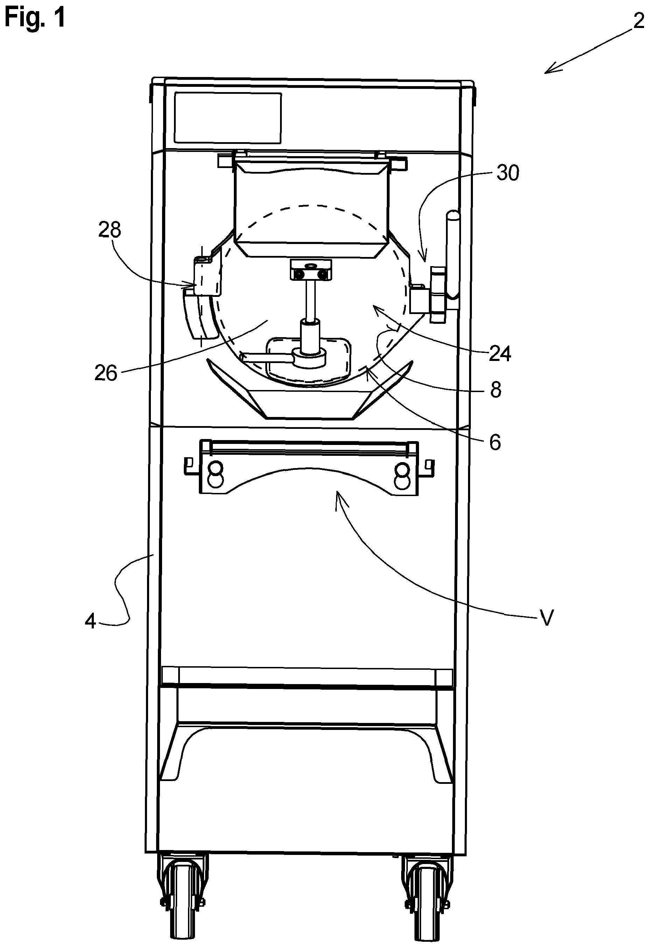

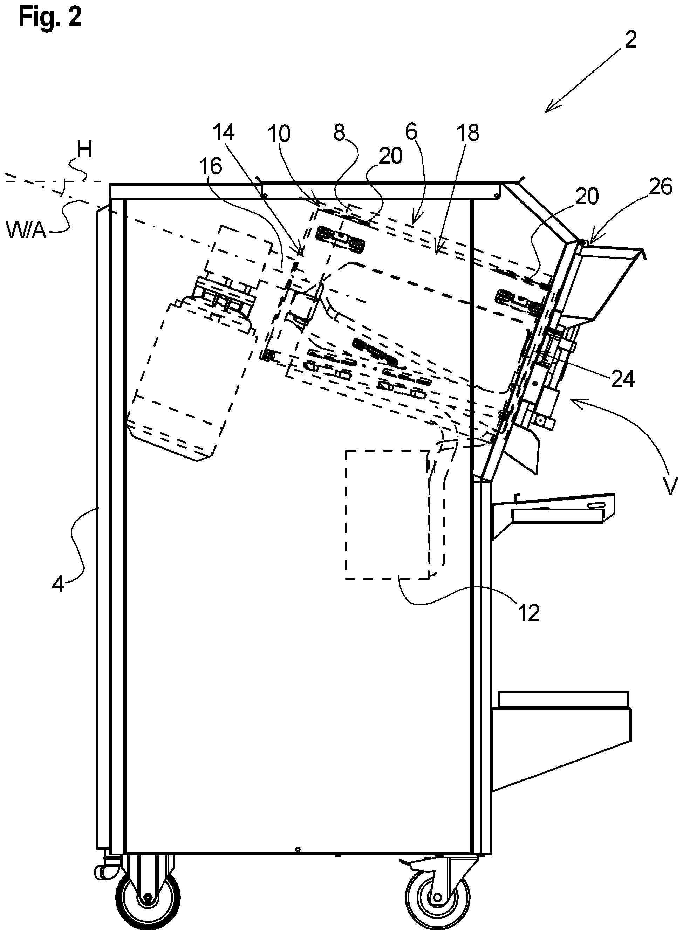

In den Figuren 1 und 2 ist eine beispielhafte Ausführungsform einer Vorrichtung 2 zum Herstellen eines fließfähigen Produktes, insbesondere von Speiseeis, Eiscreme oder eines sonstigen cremigen Produktes aus einem Ausgangsgemisch gezeigt. Die Vorrichtung 2 umfasst ein Vorrichtungsgehäuse 4, in dem ein zylindrischer Verarbeitungsbehälter 6 untergebracht ist. Wie insbesondere aus Figur 2 zu entnehmen ist, weist der Verarbeitungsbehälter 6 einen Behälterboden 7 und eine temperierbare Innenwandung 8 auf, die einen Innenraum 10 umschließen, in dem das zu bearbeitende Ausgangsgemisch aufgenommen wird. Die temperierbare Innenwandung 8 dient dabei zum Kühlen oder Erwärmen des aufgenommenen Ausgangsgemisches und ist hierzu von einem ebenfalls innerhalb des Vorrichtungsgehäuses 4 aufgenommenen Kompressor 12 und/oder einer Heizvorrichtung (nicht dargestellt) beaufschlagbar. Zudem ist in dem Vorrichtungsgehäuse 4 eine Rühreinrichtung 14 aufgenommen, mittels der das Ausgangsgemisch gerührt beziehungsweise durchmischt und mit der temperierten Innenwandung 8 in Kontakt gebracht werden kann.

Die Rühreinrichtung 14 umfasst dabei im Wesentlichen ein rotierbares Rührelement 18, das im Innenraum 10 des Verarbeitungsbehälters 6 angeordnet und von einer Antriebswelle 16 antreibbar ist. Das Rührelement 18 ist dabei größtenteils aus Metall, wie insbesondere Edelstahl, hergestellt. Um einen direkten Kontakt des Metalls des Rührelementes 18 mit der ebenfalls aus Metall hergestellten Innenwandung 8 des Verarbeitungsbehälters 6 zu verhindern, sind am Rührelement 18 mehrere Beabstandungsmittel 20 gehalten, die eine Beabstandung des Rührelementes 18 gegenüber dem Verarbeitungsbehälter 6 sowohl in axialer Richtung als auch in radialer Richtung gewährleisten. Darüber hinaus ist eine elektrische Antriebseinheit 22 vorgesehen, die mittels der Antriebswelle 16 eine Rotationsbewegung des Rührelementes 18 ermöglicht.

Der Verarbeitungsbehälter 6 weist ferner an seiner Vorderseite V eine Behälteröffnung 24 auf, die mit einer Behältertür 26 fluiddicht verschlossen werden kann. Die Behältertür 26 ist hierzu an der Vorderseite V des Vorrichtungsgehäuses 4 mittels eines auf der linken Seite der Behälteröffnung 24 angeordneten Scharnierelements 28 verschwenkbar gelagert. Dabei ist die Behältertür 26 zwischen einer gezeigten Schließposition, in welcher die Behälteröffnung 24 von der Behältertür 26 verschlossen ist, und einer Öffnungsposition verschwenkbar, in welcher der Innenraum 10 über die Behälteröffnung 24 zugänglich ist. An der vom Scharnierelement 28 abgewandten Seite der Behältertür 26 ist eine Verriegelungseinrichtung 30 vorgesehen, mittels der die Behältertür 26 in der Schließposition verriegelt werden kann.

Wie aus Fig. 2 ferner zu entnehmen, ist der Verarbeitungsbehälter 6 derart schräg im Vorrichtungsgehäuse 4 gehalten, dass er beziehungsweise seine Achse A sich zur Horizontalen H in einem Anstellwinkel W von 20 bis 50°, vorzugsweise von 30° erstreckt. Durch diese schräge Anordnung des Verarbeitungsbehälters 6 ist auch die Behälteröffnung 24 schräg ausgerichtet. Auf diese Weise kann das herzustellende Produkt nach der Verlagerung der Behältertür 26 in die Öffnungsposition, in welcher der Innenraum 10 über die Behälteröffnung 24 zugänglich ist, unmittelbar aus dem Verarbeitungsbehälter 6 fließen, so dass eine vollständige Entnahme des Produktes und die Reinigung des Verarbeitungsbehälters 6 stark vereinfacht ist.

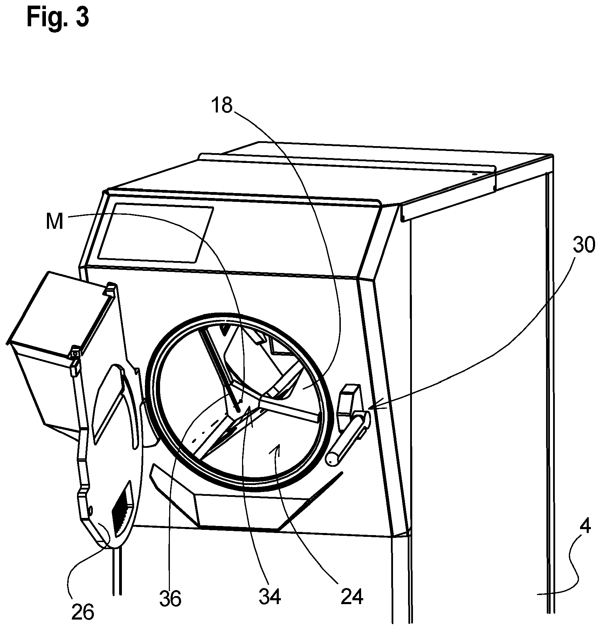

Figur 3 zeigt die Vorrichtung 2 mit der Behältertür 26 in der Öffnungsposition. Hierbei ist ersichtlich, dass an der der Behälteröffnung 24 zugewandten axialen Stirnseite 34 des Rührelementes 18 ein axiales Beabstandungsmittel 20 vorgesehen ist. Dieses steht in axialer Richtung von der axialen Stirnseite 34 des Rührelementes 18 ab und ist aus einem elastischen Material, wie insbesondere Kunststoff oder Gummi gebildet. In der Schließstellung der Behältertür 26 ist das Beabstandungsmittel 20 dadurch zwischen Rührelement 18 und Behältertür 26 angeordnet und verhindert dadurch einen Kontakt des metallischen Teils der Rühreinrichtung 14 mit der ebenfalls metallischen Innenseite 38 der Behältertür 26, wie insbesondere im Betrieb der Vorrichtung 2. Das Beabstandungsmittel 20 ist dabei zusätzlich in Form eines Abstreifelementes 36 beziehungsweise als Gummilippe ausgebildet. Dadurch dient das axiale Beabstandungsmittel 20 beziehungsweise das Abstreifelement 36 bei umlaufenden Antrieb des Rührelementes 18 zusätzlich auch zum Abziehen beziehungsweise zum Reinigen der damit in Anlage bringbaren Innenseite 38 der Behältertür 26. Hierfür erstreckt sich das Abstreifelement 36 vorzugsweise von einer geometrischen Mitte M der axialen Stirnseite 34 in radialer Richtung nach außen beziehungsweise über den kompletten Radius der Behälteröffnung 24.

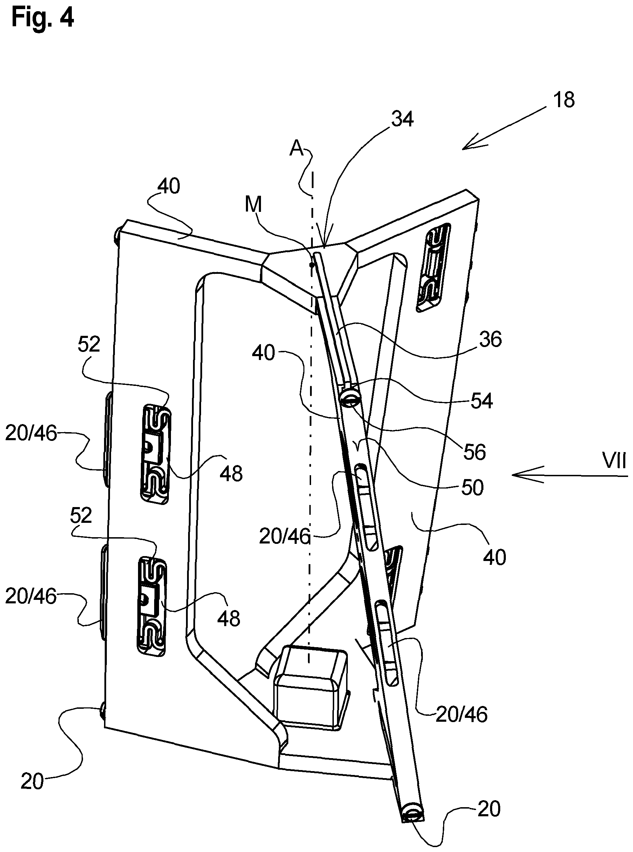

Figur 4 zeigt das Rührelement 18 im ausgebauten Zustand. Dieses weist drei zueinander winkelversetzte Schaufelblätter 40 auf. Um neben der axialen Beabstandung auch eine radiale Beabstandung des Rührelementes 18 gegenüber der Innenwandung 8 des Verarbeitungsbehälters 6 gewährleisten zu können, sind an jedem Schaufelblatt 40 zwei radiale Beabstandungsmittel 20 in Form von Kunststoffkratzern 46 ausgebildet, die aus einem Kunststoff, wie beispielsweise POM hergestellt sind. Die Kunststoffkratzer 46 sind dabei in einer Ausnehmung 48 an der Umfangsfläche 50 des Rührelementes 18 angeordnet und können mit einem darin angeordneten Federabschnitt 52 mit einer radial nach außen gerichteten Federkraft beaufschlagt werden. Auf diese Weise ist das Rührelement 18 innerhalb des Verarbeitungsbehälters 6 an der Innenwandung 8 zu drei Seiten abgestützt und zentriert.

Wie aus Figur 4 ferner zu entnehmen ist, ist das Abstreifelement 36 in einer Aufnahmenut 54 aufgenommen, in der es bezüglich der axialen Richtung formschlüssig, klemmend oder durch eine Rastverbindung lösbar fixiert ist. Dadurch kann das Abstreifelement bei Bedarf ausgetauscht werden, wie bei Verschleißerscheinungen.

Damit ein Verschieben des Abstreifelements 36 auch in radialer Richtung beziehungsweise aus der Aufnahmenut 54 heraus vermieden werden kann, ist an der Umfangsfläche 50 des betreffenden Schaufelblattes 40 ein Befestigungsmittel 56 in Form einer Schraube oder eines Stopfens vorgesehen. Das Befestigungsmittel 56 ist in einer passend geformten Ausnehmung befestigt, die ebenfalls in das Schaufelblatt 40 eingelassen ist. Im befestigten Zustand steht ein Kopf 58 des Befestigungsmittels 56 in radialer Richtung vom Schaufelblatt 40 ab, der aus Kunststoff, wie beispielsweise POM, gebildet ist und somit ebenfalls als radiales Beabstandungsmittel 20 fungieren kann.

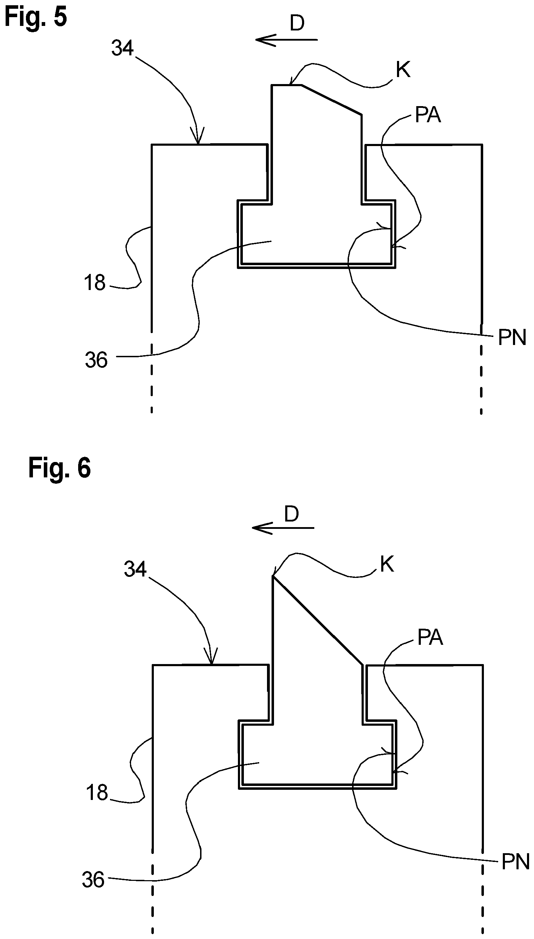

Wie aus Figur 5 zu entnehmen ist, kann die Aufnahmenut 54 beispielsweise ein T-förmiges Profil PN aufweisen, in das ein entsprechend T-förmiger Abschnitt eines Profils PA des Abstreifelementes 36 formschlüssig eingreift. Das Profil PA des Abstreifelementes 36 kann sich dabei, wie in Figur 5 dargestellt, zu einem Kontaktbereich K hin verjüngen, der an einem freien Ende in Drehrichtung geneigt ausgebildet ist. Alternativ zur Ausführungsform nach Figur 5 kann der Kontaktbereich K gemäß Figur 6 im Wesentlichen linienförmig ausgebildet sein, wobei das freie Ende des Profils PA hierzu keilförmig ausgebildet ist. In beiden Fällen ermöglichet der Kontaktbereich K ein besonders effektives Abziehen des anhaftenden Produktes von der Innenseite 38 der Behältertür 26.

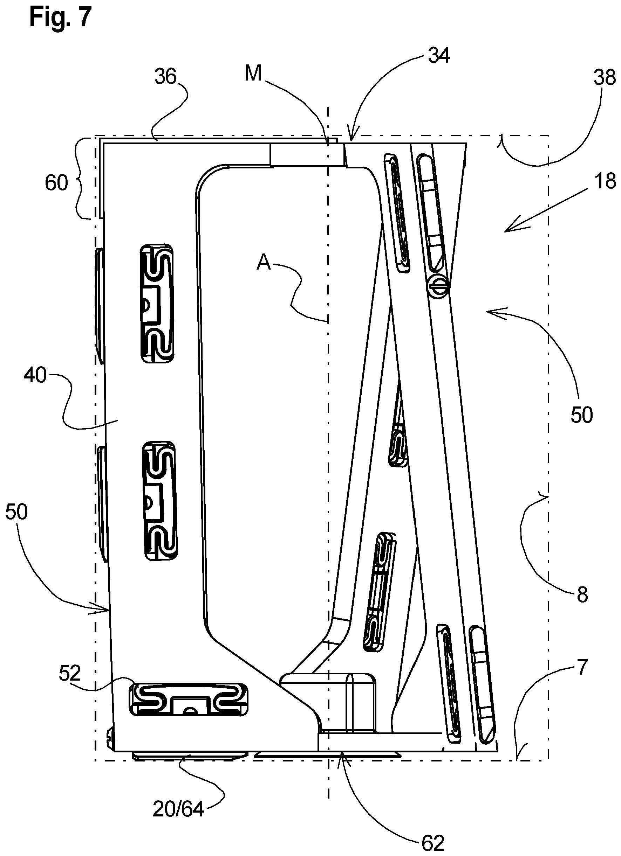

Wie aus Figur 7 zu entnehmen ist, ist an einer von der axialen Stirnseite 34 abgewandten axialen Rückseite 62 des Rührelementes 18 eines der Beabstandungsmittel 20 angeordnet, das an den Behälterboden 7 des Verarbeitungsbehälters 6 anlegbar ist, um das Rührelement 18 in Richtung der Behältertür 26 zu drücken. Dadurch ist sichergestellt, dass das Abstreifelement 36 ausreichend nahe beziehungsweise anliegend an der Innenseite 38 der Behältertür 26 angeordnet ist, um im Betrieb das an dieser anhaftende Produkt wiederkehrend entfernen zu können. Das Beabstandungsmittel ist dabei durch ein umlaufend antreibbares Abschabeelement 64 gebildet, das ebenfalls durch einen in das Rührelement 18 eingelassenen Federabschnitt 52 mit einer elastischen Rückstellkraft beaufschlagbar ist. Durch die hierbei entstehenden Klemmkräfte wird im Betrieb einerseits ein direkter Kontakt von Metall auf Metall zwischen dem Behälterboden 7 und dem Rührelement 18 vermieden und gleichzeitig kann mittels des umlaufenden Abschabeelementes 64 auch das am Behälterboden 7 anhaftende Produkt wiederkehrend entfernt werden, um den späteren Reinigungsaufwand zu vermindern. Dabei kann sich auch das Abschabeelementes 64 zumindest im Wesentlichen über den kompletten Radius des Behälterbodens 7 erstrecken, um diesen im Betrieb möglichst vollständigen abziehen zu können.

Fig. 7 zeigt zudem eine alternative Ausführungsform des Abstreifelementes 36, das sich neben der radialen Erstreckung ausgehend vom Mittelpunkt M hin zur Umfangsfläche 50 zusätzlich auch über einen Abschnitt 60 in axialer Richtung entlang der Umfangsfläche 50 des betreffenden Schaufelblattes 40 erstreckt. Dabei kann vorgesehen sein, dass der sich axial erstreckende Abschnitt 60 neben seiner Funktion als radiales Beabstandungsmittel 20 gleichzeitig auch Klemm- oder Rastmittel aufweist, mittels denen er in einer an der Umfangsfläche 50 eingelassenen Ausnehmung festgelegt werden kann (nicht dargestellt), um als Befestigungsmittel 56 für den sich radial erstreckenden Abschnitt des Abstreifelementes 36 zu fungieren.

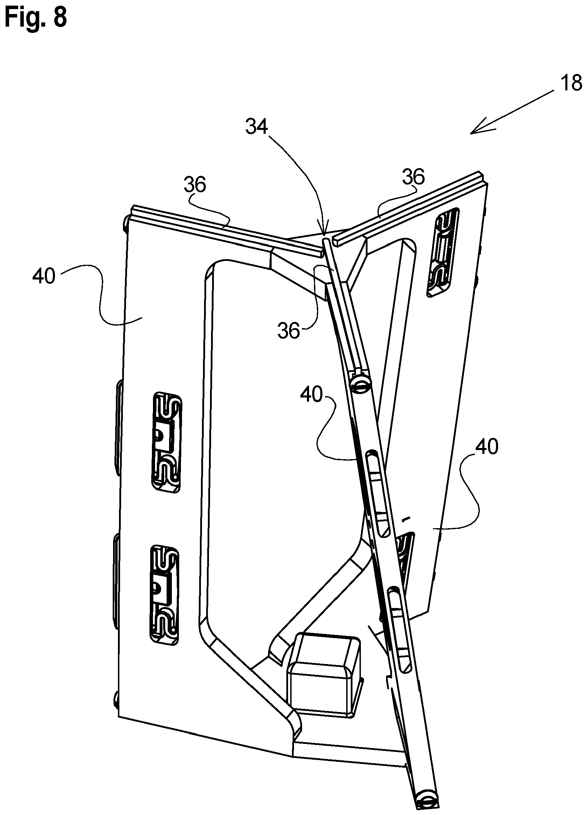

Figur 8 zeigt eine alternative Ausführungsform des Rührelementes 18, bei der an jedem der drei Schaufelblätter 40 an der axialen Stirnseite 34 ein Abstreifelement 36 vorgesehen ist. Auf diese Weise kann sich das Rührelemente 18 während eines Herstellungsvorganges besonders stabil an der Innenseite 38 der Behältertür 26 abstützten und befreit diese bei umlaufendem Antrieb in besonders kurzen Abständen wiederkehrend von anhaftendem Produkt.

## Patentansprüche

1. Vorrichtung (2) zur Herstellung eines fließfähigen Produktes, insbesondere von Speiseeis, aus einem Ausgangsgemisch umfassend
einen in einem Vorrichtungsgehäuse (4) vorgesehenen Verarbeitungsbehälter (6) mit einer temperierbaren Innenwandung (8), die einen zur Aufnahme des Ausgangsgemisches geeigneten Innenraum (10) umschließt, der über eine Behälteröffnung (24) zugänglich ist,
eine an dem Vorrichtungsgehäuse (4) verlagerbar gehaltene Behältertür (26), die zwischen einer Schließposition, in welcher die Behälteröffnung (24) verschlossen ist, und einer Öffnungsposition verschwenkbar ist, in welcher der Innenraum (10) über die Behälteröffnung (24) zugänglich ist,
und ein im Innenraum (10) angeordnetes Rührelement (18), das von einer rotierbaren Antriebswelle (16) antreibbar ist und an dem Beabstandungsmittel (20) zur Beabstandung des Rührelementes (18) gegenüber dem Verarbeitungsbehälter (6) gehalten sind,
**dadurch gekennzeichnet, dass** die Beabstandungsmittel (20) wenigstens ein Abstreifelement (36) aufweisen, das sich an einer Stirnseite (34) des Rührelementes (18) in radialer Richtung erstreckt und an einer Innenseite (38) der Behältertür (26) anliegend in Drehrichtung (D) des Rührelementes (18) umlaufend antreibbar ist.

2. Vorrichtung nach Anspruch 1, **dadurch gekennzeichnet, dass** sich das Abstreifelement (36) zumindest über einen Radius der Behälteröffnung (24) erstreckt.

3. Vorrichtung nach einem der Ansprüche 1 bis 3, **dadurch gekennzeichnet, dass** das Abstreifelement (36) durch eine Gummilippe gebildet ist.

4. Vorrichtung nach einem der Ansprüche 1 bis 4, **dadurch gekennzeichnet, dass** das Abstreifelement (36) lösbar an dem Rührelement (18) angeordnet ist.

5. Vorrichtung nach einem der Ansprüche 1 bis 5, **dadurch gekennzeichnet, dass** das Rührelement (18) eine Aufnahmenut (54) aufweist, in welcher das Abstreifelement (36) gehalten ist.

6. Vorrichtung nach einem der Ansprüche 1 bis 5, **dadurch gekennzeichnet, dass** an dem Rührelement (18) wenigstens ein Befestigungsmittel (56) angeordnet ist, mittels dem das Abstreifelement (36) in radialer Richtung fixierbar ist.

7. Vorrichtung nach Anspruch 6, **dadurch gekennzeichnet, dass** das Befestigungsmittel (56) in radialer Richtung von einer Umfangsfläche (50) des Rührelementes (18) absteht.

8. Vorrichtung nach Anspruch 7, **dadurch gekennzeichnet, dass** das Befestigungsmittel (56) durch eine Kunststoffschraube gebildet ist.

9. Vorrichtung nach einem der Ansprüche 1 bis 8 **dadurch gekennzeichnet, dass** sich das Abstreifelement (36) zusätzlich abschnittsweise in axialer Richtung entlang einer Umfangsfläche des Rührelementes (18) erstreckt.

10. Vorrichtung nach Anspruch 9, **dadurch gekennzeichnet, dass** der sich axial erstreckende Abschnitt des Abstreifelementes (36) zusätzlich zur Fixierung des Abstreifelementes (36) in radialer Richtung dient.

11. Vorrichtung nach einem der Ansprüche 1 bis 10, **dadurch gekennzeichnet, dass** das Abstreifelement (36) ein Profil (PA) aufweist, das sich in radialer Richtung zu einem Kontaktbereich (K) hin verjüngt.

12. Vorrichtung nach einem der Ansprüche 1 bis 11, **dadurch gekennzeichnet, dass** die Beabstandungsmittel (20) wenigstens zwei, vorzugsweise drei Abstreifelemente (36) aufweisen, die sich an der Stirnseite (34) des Rührelementes (18) jeweils in radialer Richtung erstrecken und dabei zueinander winkelversetzt in Drehrichtung des Rührelementes (18) angeordnet sind.

13. Vorrichtung nach einem der Ansprüche 1 bis 12, **dadurch gekennzeichnet, dass** das Rührelement (18) von einem der Beabstandungsmittel (20), das an einen Behälterboden (7) des Verarbeitungsbehälters (6) anlegbar ist in Richtung der Behältertür (26) pressbar ist.

14. Vorrichtung nach Anspruch 13, **dadurch gekennzeichnet, dass** das am Behälterboden (7) anlegbare Beabstandungsmittel (20) durch ein umlaufend antreibbares Abschabeelement (64) gebildet ist, das mit einer elastischen Rückstellkraft beaufschlagbar ist.

## Claims

1. Device (2) for producing a flowable product, in particular ice cream, from a starting mixture, comprising
a processing container (6) provided in a device housing (4) with a temperature-controllable inner wall (8) which encloses an inner space (10) suitable for receiving the starting mixture and which is accessible via a container opening (24),
a container door (26) displaceably held on the device housing (4) which is pivotable between a closed position, in which the container opening (24) is closed, and an open position, in which the inner space (10) is accessible via the container opening (24),
and an agitator element (18) arranged in the inner space (10) and which is drivable by a rotatable drive shaft (16) and on which spacing means (20) for spacing the agitator element (18) from the processing container (6) are held,
**characterised in that** the spacing means (20) have at least one wiper element (36) which extends in radial direction on an end face (34) of the agitator element (18) and which is drivable in a circulating manner, resting against an inner side (38) of the container door (26), in direction of rotation (D) of the agitator element (18).

2. Device according to claim 1, **characterised in that** the wiper element (36) extends at least over one radius of the container opening (24).

3. Device according to any one of claims 1 to 3, **characterised in that** the wiper element (36) is formed by a rubber lip.

4. Device according to any one of claims 1 to 4, **characterised in that** the wiper element (36) is releasably arranged on the agitator element (18).

5. Device according to any one of claims 1 to 5, **characterised in that** the agitator element (18) has a receiving groove (54) in which the wiper element (36) is held.

6. Device according to any one of claims 1 to 5, **characterised in that** at least one fastening means (56) is arranged on the agitator element (18), by means of which the wiper element (36) can be fixed in radial direction.

7. Device according to claim 6, **characterised in that** the fastening means (56) projects in radial direction from a circumferential surface (50) of the agitator element (18).

8. Device according to claim 7, **characterised in that** the fastening means (56) is formed by a plastic screw.

9. Device according to any one of claims 1 to 8, **characterised in that** the wiper element (36) additionally extends in sections in axial direction along a circumferential surface of the agitator element (18).

10. Device according to claim 9, **characterised in that** the axially extending portion of the wiper element (36) additionally serves to fix the wiper element (36) in radial direction.

11. Device according to any one of claims 1 to 10, **characterised in that** the wiper element (36) has a profile (PA) which tapers in radial direction towards a contact area (K).

12. Device according to any one of claims 1 to 11, **characterised in that** the spacing means (20) have at least two, preferably three wiper elements (36) which extend in each case in radial direction on the end face (34) of the agitator element (18) and are arranged at an angular offset to one another in the direction of rotation of the agitator element (18).

13. Device according to any one of claims 1 to 12, **characterised in that** the agitator element (18) is pressable in direction of the container door (26) by one of the spacing means (20) which is placeable against a container bottom (7) of the processing container (6).

14. Device according to claim 13, **characterised in that** the spacing means (20) which are placeable against the container bottom (7) are formed by a scraper element (64) which is driveable in a circulating manner and to which an elastic restoring force can be applied.

## Revendications

1. Dispositif (2) de fabrication d'un produit fluide, en particulier de crème glacée, à partir d'un mélange de départ comprenant
un récipient de traitement (6) prévu dans un boîtier de dispositif (4) avec une paroi intérieure (8) pouvant être mise en température qui entoure un espace intérieur (10) approprié à la réception du mélange de départ, espace qui est accessible par le biais d'une ouverture de récipient (24),
une porte de récipient (26) maintenue de manière déplaçable au niveau du boîtier de dispositif (4), qui est pivotante entre une position de fermeture, dans laquelle l'ouverture de récipient (24) est fermée, et une position d'ouverture, dans laquelle l'espace intérieur (10) est accessible par le biais de l'ouverture de récipient (24),
et un élément d'agitation (18) agencé dans l'espace intérieur (10) qui peut être entraîné par un arbre d'entraînement (16) rotatif et au niveau duquel des moyens d'espacement (20) sont maintenus pour l'espacement de l'élément d'agitation (18) par rapport au récipient de traitement (6),
**caractérisé en ce que** les moyens d'espacement (20) présentent au moins un élément de raclage (36) qui s'étend dans le sens radial au niveau d'un côté avant (34) de l'élément d'agitation (18) et peut être entraîné en rotation en reposant contre un côté intérieur (38) de la porte de récipient (26) dans le sens de rotation (D) de l'élément d'agitation (18).

2. Dispositif selon la revendication 1, **caractérisé en ce que** l'élément de raclage (36) s'étend au moins sur un rayon de l'ouverture de récipient (24).

3. Dispositif selon l'une quelconque des revendications 1 à 3, **caractérisé en ce que** l'élément de raclage (36) est formé par une lèvre en caoutchouc.

4. Dispositif selon l'une quelconque des revendications 1 à 4, **caractérisé en ce que** l'élément de raclage (36) est agencé de manière amovible au niveau de l'élément d'agitation (18).

5. Dispositif selon l'une quelconque des revendications 1 à 5, **caractérisé en ce que** l'élément d'agitation (18) présente une rainure de réception (54) dans laquelle l'élément de raclage (36) est maintenu.

6. Dispositif selon l'une quelconque des revendications 1 à 5, **caractérisé en ce qu'**au moins un moyen de fixation (56) est agencé au niveau de l'élément d'agitation (18), moyen de fixation à l'aide duquel l'élément de raclage (36) peut être fixé dans le sens radial.

7. Dispositif selon la revendication 6, **caractérisé en ce que** le moyen de fixation (56) fait saillie dans le sens radial d'une surface périphérique (50) de l'élément d'agitation (18).

8. Dispositif selon la revendication 7, **caractérisé en ce que** le moyen de fixation (56) est formé par une vis en matière plastique.

9. Dispositif selon l'une quelconque des revendications 1 à 8, **caractérisé en ce que** l'élément de raclage (36) s'étend en outre par sections dans le sens axial le long d'une surface périphérique de l'élément d'agitation (18).

10. Dispositif selon la revendication 9, **caractérisé en ce que** la section de l'élément de raclage (36) s'étendant axialement sert en outre à la fixation de l'élément de raclage (36) dans le sens radial.

11. Dispositif selon l'une quelconque des revendications 1 à 10, **caractérisé en ce que** l'élément de raclage (36) présente un profil (PA) qui se rétrécit dans le sens radial vers une zone de contact (K).

12. Dispositif selon l'une quelconque des revendications 1 à 11, **caractérisé en ce que** les moyens d'espacement (20) présentent au moins deux, de préférence trois éléments de raclage (36) qui s'étendent respectivement dans le sens radial au niveau du côté avant (34) de l'élément d'agitation (18) et sont agencés dans le sens de rotation en déport angulaire de l'élément d'agitation (18).

13. Dispositif selon l'une quelconque des revendications 1 à 12, **caractérisé en ce que** l'élément d'agitation (18) peut être pressé en direction de la porte de récipient (26) par l'un des moyens d'espacement (20) qui peut être placé contre un fond de récipient (7) du récipient de traitement (6).

14. Dispositif selon la revendication 13, **caractérisé en ce que** le moyen d'espacement (20) pouvant être placé contre le fond de récipient (7) est formé par un élément de raclage (64) pouvant être entraîné en rotation et auquel une force de rappel élastique peut être appliquée.
